# EUROPEAN PATENT SPECIFICATION

(11) **EP 3 217 760 B1**
(45) Date of publication and mention of the grant of the patent: **10.06.2020**
(21) Application number: 17158856.9
(22) Date of filing: 02.03.2017
(51) Int. Cl.: H05B 1/02, A47J 37/06

(54) **METHOD FOR OPTIMIZING THE FUNCTIONALITY OF PROFESSIONAL ELECTRIC OVENS, ESPECIALLY FOR PIZZAS**
VERFAHREN ZUR OPTIMIERUNG DER FUNKTIONSFÄHIGKEIT PROFESSIONELLER ELEKTRISCHER ÖFEN, INSBESONDERE FÜR PIZZEN
PROCÉDÉ POUR OPTIMISER LA FONCTIONNALITÉ DE FOURS ÉLECTRIQUES PROFESSIONNELS, NOTAMMENT POUR DES PIZZAS

(30) Priority: 10.03.2016 IT UA20161546
(43) Date of publication of application: 13.09.2017
(73) Proprietor: Moretti Forni S.p.A., 61037 Mondolfo (PU) (IT)
(72) Inventor: Moretti, Mario, 61021 Pesaro (IT)
(74) Representative: Ripamonti, Enrico

(56) References cited:
- EP-A1- 0 828 406
- WO-A1-99/11992
- US-A- 5 179 265
- US-A1- 2003 121 904

## Description

### DETAILED DESCRIPTION

### Field of the art

Professional electric ovens for making pizzas in restaurants and/or take away joints have heating elements positioned at the base of the cooking chamber, beneath / inside the cooking surface, and on the roof of the cooking chamber.

Typically, the heating temperature of the resistors of the floor and the roof may be diversified, through differentiation - set by the designated operator - of the electrical power supply above and beneath respectively supplied, usually with greater heating of the upper resistors, in that the condiment for pizzas, that is getting more and more diversified and abundant according to trends, with the relative humidity, require a radiation of the cooking heat from above, often markedly greater than the one supplied by conduction from beneath.

In the meanwhile, professional ovens must be prepared suitable to provide capacity and dispensing of relatively considerable electrical power loads, in order to meet the maximum production capacities of the oven when required by the contingent workload, i.e. contain the kilowatt peaks that can be absorbed by the oven.

Such receptive capacity of the power dispensing possibility has a cascade effect in the setting of several unavoidable technical implications to be addressed, which lead to considerable increase of costs and expenses related to the installation, start up and management of a pizza business including obvious expenses related contracts for the supply of appropriate electrical power, a local system wiring and accessories suitable for relative conduction, as well as injury prevention solutions of various types including minimum dimensions of the rooms, fire doors and anything else required by the regulations in force.

In domestic ovens, where appliances usually have low exploitable power limit, there are electronically activated self-limiting absorption solutions upon the occurrence of peaks. However, the solutions suitable for the limited power of domestic appliances cannot be transferred to the professional ovens subject of the present document.

In electrical plates for domestic cooking, the patent documents US2003/121904A1, WO99/11992A1 and EP0828406A1 illustrate solutions for the absorption containment under the plant supply limits for the case of simultaneous use of more plates, but these solutions are independent on the type of product undergoing the cooking process.

### Objects of the invention

Thus, in this context, the main object of the present invention is to provide a method for reducing the maximum power of professional electric ovens for cooking food products, in particular pizzas but simultaneously without jeopardizing performance as a result of such reduction of power with reference on the type of product undergoing the cooking process.

Another object of the present invention is to attain the previous object without contraindications concerning the power supply system and the limit thresholds for the supply of electrical power supplied with all relative technical, administrative, injury prevention and safety requirements accessories.

Another object of the present invention is to attain the previous objects through a method that can be adapted to the existent structures without particularly expensive interventions.

Another object of the present invention is to attain the previous objects through a method that is easy to manage for the operators.

Another object of the present invention is to attain the previous objects through a solution concept that is simple and efficient, safe in use and at a relatively economic cost considering the results practically attainable therewith.

### Summary of the invention

These and other objects are attained through the operating method for optimizing the functionality of professional electric ovens, especially for pizzas, according to the present invention, comprising global computerized self-limitation of absorption of electrical power by the heating means of the oven with balanced automatic distribution of electrical power supply depending on the type of product undergoing the cooking process between the heating resistors of the floor of the oven cooking chamber and the heating resistors of the roof of the oven cooking chamber upon the occurrence of an absorption peak of electrical power by the heating resistors exceeding the pre-set certified maximum oven absorption calibration, with safety disconnection of power through autonomous means dedicated to possible malfunction of the balanced self-limitation, said global computerized self-limitation being actuated and controlled by electronic means for interpolating power reduction in a balanced fashion between the floor heating resistors and the roof heating resistors depending on the needs and/or initial manual setting referred to the type of product undergoing the cooking process and/or according, possibly self-implementable, to the weighted mean of detections of the corrective actions carried out manually under similar conditions, said electronic means being integrated by independent safety electromechanical means for disconnecting absorption should said electronic means for balanced distribution and global reduction fail to perform their functions.

### Description of the embodiment

Herein provided for is an electric oven according to the prior art, particularly for professional handmade food products for restaurants and even more specifically of the type for making pizzas.

An oven thus made has means P for heating the floor of the cooking chamber, constituted by electrical resistors underlying the cooking surface or embedded therein, and means C for heating the roof of the cooking chamber, constituted by electrical resistors housed therein; the power supply of the resistors P for heating the floor and the resistors C for heating the roof is independent.

The resistors P for heating the floor are in turn preferably divided into two units P1 and P2 with independent power supply, preferably one underlying the floor area immediately facing the oven port and the other underlying the floor area more remote with respect to the oven port, but they can also be located anywhere else.

Symmetrically, the resistors C for heating the roof are preferably divided into two units C1 and C2 with independent power supply, preferably one engaging the roof area immediately facing the oven port and the other engaging the roof area more remote with respect to the oven port.

The oven is provided calibrated with a maximum power, i.e. with a maximum absorption threshold, suitable for professional use, in other words substantially accommodating the absorption levels required and sufficient to attain the cooking oven products depending on the relative functions and dimensions, as better defined hereinafter, but lower than a determined threshold, as established by a specific directive and/or regulation, beyond which the power of the oven would imply - according to the directive and/or regulation - the application or use of power supply costs and/or technical solutions e/o injury prevention requirements and/or on-site laying conditions requirements and/or anything else that can be defined as stepping up to a higher level of the implying required directive, considerable increase of costs, installation and management compliances and limitations.

In this context, the method according to the present invention provides for the normal use of the oven by the operator by setting the cooking times and power values, usually diversified between upper and lower heating means:
for example, with more power conveyed to the upper heating means with the aim of attaining greater heat from above for cooking the condiment arranged on top of the dough when cooking occurs directly on the oven deck;
on the contrary, with more power conveyed to the lower heating means with the aim of obtaining more heat from the bottom for cooking the dough when it is held in a baking tin.

Were the sum of the power values - manually set by the operator - of the means P for heating the floor and means C for heating the roof to reach an absorption peak exceeding the oven power, the method according to the present invention provides for that a duly programmed electronic device limits the absorbed power within the oven calibration threshold.

Such oven absorption global self-limitation programming is carried out through the balanced automatic distribution of electrical power supply between the heating resistors P of the oven cooking chamber floor and the heating resistors C of the oven cooking chamber roof, interpolated for the reduction of power between the floor and the roof in a balanced fashion depending on:
- the manual setting of the heating difference between the floor and the roof set by the operator depending on the specific cooking cycle;
- and/or the manual setting of the heating difference between the floor and the roof initially set by the operator;
- and/or the mean of the manual settings of the heating difference between the floor and the roof set by the operator over a given period of time;
- and/or the reset heating difference between the floor and the roof for the specific type of cooking should such function be available and applied;
- and/or the manual setting of heating difference between the floor and the roof set by the operator for the specific type of cooking where it can be preset;
- and/or the mean manual setting values regarding the heating difference between the floor and the roof set by the operator for the specific type of cooking where it can be preset;
- and/or the interpolation of the aforementioned parameters and/or each of them with the manual correction action or actions carried out by the operator according to the manual setting of heating difference between the floor and the roof set by the operator depending on the specific cooking cycle;
- and/or the interpolation of the aforementioned parameters and/or each of them with the manual correction action or actions carried out by the operator according to the mean manual setting values of heating difference between the floor and the roof set by the operator over a period of time;

Should the electronic management of the self-limitation, in any embodiment and the relative balanced interpolation combination fail, the method according to the present invention provides for an autonomous and independent safety system, i.e. an electromechanical device against the risk of exceeding the maximum power that totally cuts the power supply upon detecting the peak exceeding the maximum value, through a solenoid valve or fuse, possibly resettable.

From a functional point of view, during research it was statistically observed that, through a long-lasting electronic monitoring for a suitable period of time of a considerable number of ovens in their current and actual professional application, as concerns the overall exploited power and, in this context, as concerns power distribution between means for heating the floor and the roof of the cooking chamber, that they are never exploited to the maximum, otherwise the pizzas would burn, but in interpolated combination of various heating applications on the floor and the roof of the oven, depending on the desired type of cooking, which varies depending on the condiment of the pizza.

Thus, in the actual production cycle, the oven is never exploited to the fullest of its potential, or at least there substantially never arises the need to exploit it to the fullest of potential, except for contingent peaks, which however add nothing to the functional benefits.

The absorption curve described by such statistical observations enables isolating parameters suitable to be entered into a computerized logic suitable to optimize the distribution of power over time and in the resistors. The performance of a current high power can be attained using an oven of lesser power, with the advantage, if astride a threshold defined by regulations for specific applications, of obtaining the desired performance without having to provide such applications in that the oven has a lower maximum power and it is declared as it is.

However, the power values in question do not allow exclusive dependence on the electronic management of limitations and distribution to ensure the reduction of absorption peaks.

Thus, a further control of the autonomous and electromechanical type was introduced so that - were the electronic limitation to fail - a "solenoid valve" or rather an electromechanical "resettable fuse" of the known type - used in the known prior art for monitoring large dimension electric motors such as industrial ventilator motors - intervenes and shuts everything off.

Thus, the method integrates a technique that somehow constitutes some sort of automatic guide, as well as a functional assurance, for the operator, in that the operator is free to set the oven with power distribution between means for heating the floor and the roof of the cooking chamber deemed most appropriate for that specific type of cooking and, if the sum of the settings determines a peak incompatible with the maximum absorption of the oven, the self-limitation and computerized reset of the parameters intervenes to correct the manual settings reducing power in means for heating the floor and the roof of the cooking chamber, not with the same values but according to a percentage as a function of the introduced parameters.

The method can be conceived for self-implementation in that the computerized logic may be programmed to implement the settings and corrections that occur over time, with the programming and corrections manually carried out by the operator, and substantially all interventions thereof, processing them and obtaining corrective mean values based on the relative weighting.

An example of a computerized logic for implementing the method may provide for the management of the four outputs, i.e. outputs constituted by the two independent units P1, P2 of the resistors P for heating the floor and by the outputs constituted by the two independent units C1, C2 of the resistors C for heating the roof of the cooking chamber, according to two input parameters constituted by the activation time T1 of the two independent units P1, P2 of the resistors P for heating the floor during the -ith time slot and the activation time T2 of the two independent units C1, C2 of the resistors C for heating the roof during the-ith time slot

The computerized logic establishes, for each -ith time slot of a predefined duration, which outputs should be activated and for how long they should be kept active: T1 is the activation time of outputs P1 and P2 in the -ith time slot, T2 is the time of activation of outputs C1 and C2 in the -ith time slot.

This is established at the beginning of each -ith time slot depending on inputs T1 and T2.

The computerized logic meets the following conditions:
only a maximum of three outputs can be simultaneously active; in other words, there is no combination of T1 and T2 that simultaneously activates the four outputs P1, P2, C1, C2;
When possible, the entire available time slot is used for activating the outputs according to the set inputs so as not to actuate a re-modulation of the inputs T1 and T2.

Should the time slot fail to contain the input settings constituted by the parameters set by the operator, the computerized logic decides a re-modulation in absence of T1 and T2 so as to make them congruous to the duration of the preset time slot.

Should there arise the need to activate the outputs P1 and P2 for different times regulated by T1 and the outputs C1 and C2 regulated by T2 the activation of output P1 is prioritized with respect to P2 and the activation of output C1 is prioritized with respect to C2.

### Alternative embodiments

It is obvious that in further alternative embodiments still falling within the innovation concept subject of the embodiment illustrated above and claimed below, the method for optimizing the functionality of professional electric ovens, especially for pizzas, according to the present invention, may be implemented through equivalent methods and structural techniques, i.e. with further supplementary solutions, same case applying to application parameters that can be varied to suit the purpose.

### Advantages of the invention

As clearly observable from the preceding detailed description of a preferred embodiment as well as from some of the aforementioned variant embodiments, the method for optimizing the functionality of professional electric ovens, especially for pizzas, according to the present invention, offers advantages corresponding to attaining preset objects and others: it actually supplements a functional solution concept suitable to contain the maximum power of professional ovens with reference on the type of product undergoing the cooking process, with all possible advantages in terms of lower purchase cost, laying on site, power supply and management, without jeopardizing the performance that can be obtained through prior art solutions only by using ovens with higher power.

## Claims

1. Operating method for optimizing the functionality of professional electric ovens, especially for pizzas, the ovens comprising:
- a cooking chamber;
- first resistors (P) for heating the floor of the cooking chamber; and
- second resistors (C) for heating the roof of the cooking chamber, the method being **characterized in that** it comprises global computerized self-limitation of absorption of electrical power by the heating means (P,C) of the oven with balanced automatic distribution of electrical power supply depending on the type of product undergoing the cooking process between the first heating resistors (P) for the floor of the oven cooking chamber and the second heating resistors (C) for the roof of the oven cooking chamber, said heating resistors for the floor and for the roof having independent power supply one with respect to each other, wherein upon the occurrence of absorption peaks of electrical power by the resistors exceeding a preset certified calibration maximum oven absorption power, performing a safety disconnection of power by means of independent means dedicated to possible malfunction of the balanced self-limitation, said global computerized self-limitation being actuated and controlled by electronic means integrated by independent safety electromechanical means for disconnecting power absorption should said electronic means for balanced distribution and global reduction fail to perform their functions of power reduction in a balanced fashion between the floor heating means and the roof heating means, said balancing depending on the needs and/or on the initial manual setting referring to the type of product undergoing the cooking process and/or according, possibly self-implementable, to the weighted mean of detections of the corrective actions carried out manually under similar conditions.

2. Operating method for optimizing the functionality of professional electric ovens, especially for pizzas, according to claim 1, said electric ovens being of the type provided with:
- means (P) for heating the floor of the cooking chamber, constituted by electrical resistors underlying the cooking surface or embedded therein, and means (C) for heating the roof of the cooking chamber, constituted by electrical resistors suspended therein, with independent power supply of the resistors (P) for heating the floor and the resistors (C) for heating the roof;
wherein
- the resistors (P) for heating the floor are divided into two units (P1, P2) with independent power supply, preferably one underlying the floor area immediately facing the oven port and the other underlying the most remote floor area with respect to the oven port;
- the resistors (C) for heating the roof are divided into two units (C1, C2) with independent power supply, one preferably engaging the roof area immediately facing the oven port and the other engaging the most remote roof area with respect to the oven port; the method being
**characterized in that**
- should the sum of the power values, manually set by the operator, of the means (P) for heating the floor and means (C) for heating the roof reach an absorption peak exceeding the oven power, an electronic device with computerized logic limits the absorbed power within the oven calibration threshold with automatic balanced distribution of electrical power supply between the resistors (P) for heating the floor of the oven cooking chamber and the resistors (C) for heating the roof of the oven cooking chamber, interpolating power reduction between the floor and the roof in a balanced fashion according to the parameters obtained from the data detected from the previous use.

3. Operating method for optimizing the functionality of electric ovens according to claim 2, **characterized in that** said parameters, as a function of which the reduction of power supply to the cooking chamber floor and roof are interpolated in a balanced fashion, are constituted by optimal preset criteria for the specific type of product being cooked.

4. Operating method for optimizing the functionality of electric ovens according to claim 2, **characterized in that** said parameters, as a function of which the reduction of power supply to the cooking chamber floor and roof are interpolated in a balanced fashion are constituted:
- by the manual setting of the heating difference between the floor and the roof set by the operator depending on the specific cooking cycle;
- and/or by the manual setting of heating difference between the floor and the roof initially set by the operator;
- and/or by the mean value of the manual settings of heating difference between the floor and the roof set by the operator over a period of time;
- and/or by the reset heating difference between the floor and the roof for the specific type of cooking should such function be available and applied;
- and/or by the manual setting of heating difference between the floor and the roof set by the operator for the specific type of cooking where it can be preset;
- and/or by the mean manual setting values regarding the heating difference between the floor and the roof set by the operator for the specific type of cooking where it can be preset;
- and/or by the interpolation of the aforementioned parameters and/or each of them with the manual correction action or actions carried out by the operator according to the manual setting of heating difference between the floor and the roof set by the operator depending on the specific cooking cycle;
- and/or by the interpolation of the aforementioned parameters and/or each of them with the manual correction action or actions carried out by the operator according to the mean manual setting values of heating difference between the floor and the roof set by the operator over a period of time.

5. Operating method for optimizing the functionality of professional electric ovens, especially for pizzas, according to claim 2, **characterized in that** it can be self-implemented through a computerized logic programmed to implement the settings and corrections that occur over time, with the programming and correction operations carried out manually by the operator, and substantially all actions of the operator, processing them and obtaining mean corrective values according to the relative weighting.

6. Operating method for optimizing the functionality of professional electric ovens, especially for pizzas, according to any one of claims 2 to 3, **characterized in that** should the possibility of electronic management of the self-limitation, in any embodiment and relative balanced interpolation combination, fail, an autonomous and independent safety system constituted by an electromechanical device intervenes against the risk of exceeding the maximum power totally cutting the power supply upon detecting the peak exceeding the maximum value, through a solenoid valve or fuse, possibly resettable.

7. Operating method for optimizing the functionality of professional electric ovens, especially for pizzas, according to any one of claims 2 to 3, **characterized in that** a programmed computerized logic for implementing the method provides for:
- the management of the four outputs, i.e. outputs constituted by the two independent units (P1, P2) of the resistors (P) for heating the floor and by the outputs constituted by the two independent units (C1, C2) of the resistors (C) for heating the roof of the cooking chamber, according to two input parameters constituted by the activation time (T1) of the two independent units (P1, P2) of the resistors (P) for heating the floor during the -ith time slot and the activation time (T2) of the two independent units (C1, C2) of the resistors (C) for heating the roof during the -ith time slot;
- determining, for each predefined duration of the -ith time slot, which outputs should be activated and how long they should be kept active as regards the time (T1) of activation of the outputs (P1, P2) of the resistors (P) for heating the floor during the -ith time slot and as regards the time (T2) of activation of the outputs (C1, C2) of the resistors (C) for heating the roof during the
- ith time slot;
- where the conditions are met and according to which:
- only a maximum of three outputs can be simultaneously active when there is no time combination (T1) for activating the outputs (P1, P2) of the resistors (P) for heating the floor during the -ith time slot and the time (T2) for activating the outputs (C1, C2) of the resistors (C) for heating the roof during the -ith time slot regarding which all the four outputs (P1, P2, C1, C2) thereof are simultaneously active;
- when possible, the entire available time slot is used for activating the outputs according to the set inputs so as not to actuate a re-modulation of the time inputs (T1) for activating the outputs (P1, P2) of the resistors (P) for heating the floor and the time (T2) for activating the outputs (C1, C2) of the resistors (C) for heating the roof;
- should the time slot fail to contain the input settings constituted by the parameters set by the operator, the computerized logic decides a re-modulation in absence of time (T1) for the activation of the outputs (P1, P2) of the resistors (P) for heating the floor and the time a (T2) for activating the outputs (C1, C2) of the resistors (C) for heating the roof so as to make them congruous to the duration of the preset time slot.

8. Operating method according to the preceding claim **characterized in that** should there arise the need to activate the output (P1) underlying the floor area immediately facing the oven port and the output (P2) underlying the most remote floor area with respect to the oven port and the output (C1) engaging the roof area immediately facing the oven port and the output (C2) engaging the most remote roof area with respect to oven port for different times, the activation of the output (P1) underlying the floor area immediately facing the oven port is prioritized with respect to the output (P2) underlying the most remote floor area with respect to the oven port and the output (C1) engaging the roof area immediately facing the oven port with respect to the output (C2) engaging the most remote roof area with respect to the oven port.

## Patentansprüche

1. Betriebsverfahren zum Optimieren der Funktionalität professioneller Elektroöfen, insbesondere für Pizzen, wobei die Öfen Folgendes umfassen:
- eine Kochkammer,
- erste Widerstände (P) zum Beheizen des Bodens der Kochkammer und
- zweite Widerstände (C) zum Beheizen der Decke der Kochkammer, wobei das Verfahren **dadurch gekennzeichnet ist, dass** es allgemeine rechnergestützte Selbstbegrenzung der Absorption von Elektroenergie durch die Heizmittel (P, C) des Ofens mit ausgeglichener automatischer Verteilung der Elektroenergieversorgung abhängig von der Art des Produkts, das dem Kochprozess unterliegt, zwischen den ersten Heizwiderständen (P) für den Boden der Kochkammer des Ofens und den zweiten Heizwiderständen (C) für die Decke der Kochkammer des Ofens umfasst, wobei die Heizwiderstände für den Boden und die Decke eine voneinander unabhängige Energieversorgung aufweisen, wobei auf das Auftreten von Elektroenergie-Absorptionsspitzen durch die Widerstände hin, die eine voreingestellte zertifizierte maximale Kalibrierungsofenabsorptionsenergie übersteigen, eine Sicherheitsenergieabschaltung mittels unabhängiger Mittel durchgeführt wird, die speziell für mögliche Fehlfunktionen der ausgeglichenen Selbstbegrenzung vorgesehen sind, wobei die allgemeine rechnergestützte Selbstbegrenzung durch elektronische Mittel betätigt und gesteuert wird, die integriert sind durch unabhängige elektromechanische Sicherheitsmittel zum Abschalten der Energieabsorption, sollten die elektronischen Mittel für ausgeglichene Verteilung und allgemeine Reduktion ihre Funktionen der Energiereduktion in einer ausgeglichenen Weise zwischen den Bodenheizmitteln und den Deckenheizmitteln nicht ausführen, wobei das Ausgleichen von den Bedürfnissen und/oder von der anfänglichen manuellen Einstellung bezüglich der Art des Produkts abhängen, das dem Kochprozess unterliegt, und/oder, möglicherweise selbstimplementierbar, gemäß dem gewichteten Mittelwert der Erkennungen der Korrekturmaßnahmen, die manuell unter ähnlichen Bedingungen ausgeführt werden.

2. Betriebsverfahren zum Optimieren der Funktionalität professioneller Elektroöfen, insbesondere für Pizzen, nach Anspruch 1, wobei die Elektroöfen von der Art sind, die mit Folgendem ausgestattet ist:
- Mittel (P) zum Beheizen des Bodens der Kochkammer, die von elektrischen Widerständen gebildet werden, die unter der Kochoberfläche liegen oder in diese eingebettet sind, und Mittel (C) zum Beheizen der Decke der Kochkammer, die durch elektrische Widerstände gebildet sind, die darin aufgehängt sind, mit unabhängiger Energieversorgung der Widerstände (P) zum Beheizen des Bodens und der Widerstände (C) zum Beheizen der Decke,
wobei
- die Widerstände (P) zum Beheizen des Bodens in zwei Einheiten (P1, P2) mit unabhängiger Energieversorgung unterteilt sind, wobei vorzugswese eine unter dem Bodenbereich liegt, der unmittelbar der Ofenöffnung zugewandt ist und die andere unter dem von der Ofenöffnung am weitesten entfernten Bodenbereich liegt,
- die Widerstände (C) zum Beheizen der Decke in zwei Einheiten (C1, C2) mit unabhängiger Energieversorgung unterteilt sind, wobei vorzugsweise eine mit dem Deckenbereich in Eingriff steht, der unmittelbar der Ofenöffnung zugewandt ist, und die andere mit dem von der Ofenöffnung am weitesten entfernten Deckenbereich in Eingriff steht,
wobei das Verfahren **dadurch gekennzeichnet ist, dass**,
- sollte die Summe der Energiewerte, die durch den Bediener manuell eingestellt werden, der Mittel (P) zum Beheizen des Bodens und der Mittel (C) zum Beheizen der Decke eine Absorptionsspitze erreichen, die die Ofenenergie übersteigt, eine elektronische Vorrichtung mit rechnergestützter Logik die absorbierte Energie innerhalb des Ofenkalibrierungsgrenzwertes mit automatischer ausgeglichener Verteilung der Elektroenergieversorgung zwischen den Widerständen (P) zum Beheizen des Bodens der Ofenkammer und den Widerständen (C) zum Beheizen der Decke der Ofenkammer begrenzt und dabei die Energiereduktion zwischen dem Boden und der Decke in einer ausgeglichenen Weise gemäß den Parametern interpoliert, die von den Daten erzielt werden, die aus dem vorherigen Gebrauch erkannt werden.

3. Betriebsverfahren zum Optimieren der Funktionalität von Elektroöfen nach Anspruch 2, **dadurch gekennzeichnet, dass** die Parameter, als deren Funktion die Reduktion der Energieversorgung zum Kochkammerboden und zur Kochkammerdecke in einer ausgeglichenen Weise interpoliert wird, von optimalen voreingestellten Kriterien für die spezifische Art des zu kochenden Produkts gebildet sind.

4. Betriebsverfahren zum Optimieren der Funktionalität von Elektroöfen nach Anspruch 2, **dadurch gekennzeichnet, dass** die Parameter, als deren Funktion die Reduktion der Energieversorgung zum Kochkammerboden und zur Kochkammerdecke in einer ausgeglichenen Weise interpoliert wird, durch Folgendes gebildet sind:
- die manuelle Einstellung der Heizdifferenz zwischen dem Boden und der Decke, die durch den Bediener abhängig von dem speziellen Kochzyklus eingestellt wird,
- und/oder die manuelle Einstellung der Heizdifferenz zwischen dem Boden und der Decke, die durch den Bediener anfänglich eingestellt wird,
- und/oder den Mittelwert der manuellen Einstellungen der Heizdifferenz zwischen dem Boden und der Decke, die durch den Bediener über eine Zeitspanne eingestellt wird,
- und/oder die zurückgesetzte Heizdifferenz zwischen dem Boden und der Decke für die spezielle Art des Kochens, sollte eine derartige Funktion zur Verfügung stehen und angewandt werden,
- und/oder die manuelle Einstellung der Heizdifferenz zwischen dem Boden und der Decke, die durch den Bediener für die spezielle Art des Kochens eingestellt wird, wo sie voreingestellt werden kann,
- und/oder die mittleren manuellen Einstellungswerte hinsichtlich der Heizdifferenz zwischen dem Boden und der Decke, die durch den Bediener für die spezielle Art des Kochens eingestellt werden, wo sie voreingestellt werden kann,
- und/oder die Interpolation der zuvor genannten Parameter und/oder jedes einzelnen davon mit der manuellen Korrekturmaßnahme oder mit Maßnahmen, die durch den Bediener gemäß der manuellen Einstellung der Heizdifferenz zwischen dem Boden und der Decke, die durch den Bediener abhängig von dem speziellen Kochzyklus eingestellt wird, ausgeführt werden,
- und/oder die Interpolation der zuvor genannten Parameter und/oder jedes einzelnen davon mit der manuellen Korrekturmaßnahme oder mit Maßnahmen, die durch den Bediener gemäß den mittleren manuellen Einstellungswerten der Heizdifferenz zwischen dem Boden und der Decke, die durch den Bediener über eine Zeitspanne eingestellt werden, ausgeführt werden.

5. Betriebsverfahren zum Optimieren der Funktionalität professioneller Elektroöfen, insbesondere für Pizzen, nach Anspruch 2, **dadurch gekennzeichnet, dass** es durch eine rechnergestützte Logik selbstimplementierbar sein kann, die dafür programmiert ist, die Einstellungen und Korrekturen, die im Zeitverlauf erfolgen, mit den durch den Bediener manuell ausgeführten Programmierungs- und Korrekturoperationen und im Wesentlichen allen Maßnahmen des Bedieners zu implementieren, durch Verarbeiten derselben und durch Erzielen mittlerer Korrekturwerte gemäß der relativen Gewichtung.

6. Betriebsverfahren zum Optimieren der Funktionalität professioneller Elektroöfen, insbesondere für Pizzen, nach einem der Ansprüche 2 bis 3, **dadurch gekennzeichnet, dass**, sollte die Möglichkeit der elektronischen Handhabung der Selbstbegrenzung in einer beliebigen Ausführungsform und relativ ausgeglichenen Interpolationskombination versagen, ein autonomes und unabhängiges Sicherheitssystem, das von einer elektromagnetischen Vorrichtung gebildet ist, dem Risiko des Überschreitens der maximalen Energie entgegenwirkt und die Energieversorgung auf das Erkennen hin, dass die Spitze den maximalen Wert übersteigt, durch eine Magnetventil oder eine Sicherung, möglichst zurückstellbar, vollständig abschneidet.

7. Betriebsverfahren zum Optimieren der Funktionalität professioneller Elektroöfen, insbesondere für Pizzen, nach einem der Ansprüche 2 bis 3, **dadurch gekennzeichnet, dass** eine programmierte rechnergestützte Logik für das Umsetzen des Verfahrens für Folgendes sorgt:
- die Handhabung der vier Ausgänge, d. h. Ausgänge, die durch die zwei unabhängigen Einheiten (P1, P2) der Widerstände (P) zum Beheizen des Bodens gebildet sind, und Ausgänge, die durch die zwei unabhängigen Einheiten (C1, C2) der Widerstände (C) zum Beheizen der Decke der Kochkammer gebildet sind, gemäß zweier Eingangsparameter, die durch die Aktivierungszeit (T1) der zwei unabhängigen Einheiten (P1, P2) der Widerstände (P) zum Beheizen des Bodens während des i. Zeitfensters und die Aktivierungszeit (T2) der zwei unabhängigen Einheiten (C1, C2) der Widerstände (C) zum Beheizen der Decke während des i. Zeitfensters gebildet sind,
- Bestimmen für jede vordefinierte Dauer des i. Zeitfensters, welche Ausgänge aktiviert werden sollen und wie lange sie hinsichtlich der Zeit (T1) der Aktivierung der Ausgänge (P1, P2) der Widerstände (P) zum Beheizen des Bodens während des i. Zeitfensters und hinsichtlich der Zeit (T2) der Aktivierung der Ausgänge (C1, C2) der Widerstände (C) zum Beheizen der Decke während des i. Zeitfensters aktiv gehalten werden sollen,
- wobei die Bedingungen erfüllt werden und gemäß diesen:
- nur ein Maximum von drei Ausgängen gleichzeitig aktiv sein kann, wenn keine Kombination der Zeit (T1) zum Aktivieren der Ausgänge (P1, P2) der Widerstände (P) zum Beheizen des Bodens während des i. Zeitfensters und der Zeit (T2) zum Aktivieren der Ausgänge (C1, C2) der Widerstände (C) zum Beheizen der Decke während des i. Zeitfensters besteht, hinsichtlich derer alle vier Ausgänge (P1, P2, C1, C2) gleichzeitig aktiv sind,
- wenn möglich, das gesamte verfügbare Zeitfenster für die Aktivierung der Ausgänge gemäß den eingestellten Eingängen verwendet wird, so dass keine erneute Modulierung der Eingänge der Zeit (T1) zum Aktivieren der Ausgänge (P1, P2) der Widerstände (P) zum Beheizen des Bodens und der Zeit (T2) zum Aktivieren der Ausgänge (C1, C2) der Widerstände (C) zum Beheizen der Decke erfolgt,
- sollte das Zeitfenster keine Eingangseinstellungen enthalten, die durch die vom Bediener eingestellten Parameter gebildet werden, entscheidet die rechnergestützte Logik bei Nichtvorhandensein einer Zeit (T1) zum Aktivieren der Ausgänge (P1, P2) der Widerstände (P) zum Beheizen des Bodens und der Zeit (T2) zum Aktivieren der Ausgänge (C1, C2) der Widerstände (C) zum Beheizen der Decke eine erneute Modulierung, so dass sie kongruent zur Dauer des voreingestellten Zeitfensters gemacht werden.

8. Betriebsverfahren nach dem vorhergehenden Anspruch, **dadurch gekennzeichnet, dass**, sollte der Bedarf entstehen, den Ausgang (P1), der unter dem Bodenbereich liegt, der unmittelbar der Ofenöffnung zugewandt ist, und den Ausgang (P2), der unter dem Bodenbereich liegt, der hinsichtlich der Ofenöffnung am weitesten entfernt liegt, und den Ausgang (C1), der mit dem Deckenbereich in Eingriff steht, der unmittelbar der Offenöffnung zugewandt ist, und den Ausgang (C2), der mit dem hinsichtlich der Ofenöffnung am weitesten entfernten Deckenbereich in Eingriff steht, für unterschiedliche Zeiten zu aktivieren, die Aktivierung des Ausgangs (P1), der unter dem Bodenbereich liegt, der unmittelbar der Ofenöffnung zugewandt ist, gegenüber dem Ausgang (P2), der unter dem Bodenbereich liegt, der hinsichtlich der Ofenöffnung am weitesten entfernt liegt, und des Ausgangs (C1), der mit dem Deckenbereich in Eingriff steht, der unmittelbar der Offenöffnung zugewandt ist, gegenüber dem Ausgang (C2), der mit dem hinsichtlich der Ofenöffnung am weitesten entfernten Deckenbereich in Eingriff steht, Priorität erhalten.

## Revendications

1. Méthode opérationnelle pour l'optimisation de la fonctionnalité de fours électriques professionnels, en particulier pour les pizzas, les fours comprenant :
- une chambre de cuisson ;
- des premières résistances (P) pour le chauffage de la partie inférieure de la chambre de cuisson ; et
- des secondes résistances (C) pour le chauffage de la partie supérieure de la chambre de cuisson, la méthode étant **caractérisée en ce qu'**elle comprend une autolimitation informatisée globale d'absorption de l'énergie électrique via les moyens de chauffage (P, C) du four avec une distribution automatique équilibrée de l'alimentation en énergie électrique selon le type de produit subissant le processus de cuisson entre les premières résistances chauffantes (P) pour la partie inférieure de la chambre de cuisson du four et les secondes résistances chauffantes (C) pour la partie supérieure de la chambre de cuisson du four, lesdites résistances chauffantes pour la partie inférieure et la partie supérieure possédant des alimentations électriques indépendantes les unes des autres, dans laquelle, lors de la survenue de pics d'absorption d'énergie électrique par les résistances dépassant une énergie d'absorption du four maximale selon un étalonnage certifié prédéfini, produisant une coupure électrique de sécurité par le biais de moyens indépendants dédiée à un dysfonctionnement possible de l'autolimitation équilibrée, ladite autolimitation informatisée globale étant actionnée et contrôlée par des moyens électroniques intégrés par des moyens de sécurité électromécaniques indépendants pour la coupure de l'absorption d'énergie si ces moyens électroniques pour la distribution équilibrée et la réduction globale ne remplissent pas leurs fonctions de réduction d'énergie d'une manière équilibrée entre les moyens de chauffage de la partie inférieure et les moyens de chauffage de la partie supérieure, ledit équilibrage dépendant des besoins et/ou du paramétrage manuel initial se référant au type de produit subissant le processus de cuisson et/ou selon, pouvant possiblement être mise en œuvre automatiquement, la moyenne pondérée des détections des actions correctives effectuées manuellement dans des conditions similaires.

2. Méthode opérationnelle pour l'optimisation de la fonctionnalité de fours électriques professionnels, en particulier pour des pizzas, selon la revendication 1, lesdits fours électriques étant du type équipé des éléments suivants :
- moyens (P) pour le chauffage de la partie inférieure de la chambre de cuisson, constitués de résistances électriques sous la surface de cuisson ou intégrées à celle-ci, et moyens (C) pour le chauffage de la partie supérieure de la chambre de cuisson, constitués de résistances électriques suspendues dans ceux-ci, avec des alimentations électriques indépendantes des résistances (P) pour le chauffage de la partie inférieure et des résistances (C) pour le chauffage de la partie supérieure ;
dans laquelle
- les résistances (P) pour le chauffage de la partie inférieure sont divisées en deux unités (P1, P2) avec des alimentations électriques indépendantes, de préférence une sous la zone de la partie inférieure immédiatement orientée vers l'orifice d'accès au four et l'autre sous la zone de la partie inférieure la plus éloignée par rapport à l'orifice d'accès au four ;
- les résistances (C) pour le chauffage de la partie supérieure sont divisées en deux unités (C1, C2) avec des alimentations électriques indépendantes, de préférence une entrant en contact avec la zone de la partie supérieure immédiatement orientée vers l'orifice d'accès au four et l'autre entrant en contact avec la zone de la partie supérieure la plus éloignée par rapport à l'orifice d'accès au four ;
la méthode étant **caractérisée en ce que**
- si la somme des valeurs de puissance, manuellement réglées par l'opérateur, des moyens (P) pour le chauffage de la partie inférieure et des moyens (C) pour le chauffage de la partie supérieure atteint un pic d'absorption dépassant la puissance du four, un dispositif électronique avec une logique informatisée limitera l'énergie absorbée au sein du seuil d'étalonnage du four avec une distribution équilibrée automatique de l'alimentation en énergie électrique entre les résistances (P) pour le chauffage de la partie inférieure de la chambre de cuisson du four et les résistances (C) pour le chauffage de la partie supérieure de la chambre de cuisson du four, interpolant une réduction de puissance entre la partie inférieure et la partie supérieure d'une manière équilibrée selon les paramètres obtenus à partir des données détectées lors de la précédente utilisation.

3. Méthode opérationnelle pour l'optimisation de la fonctionnalité de fours électriques selon la revendication 2, **caractérisée en ce que** lesdits paramètres, en fonction desquels la réduction de l'alimentation électrique vers les parties inférieure et supérieure de la chambre de cuisson est interpolée d'une manière équilibrée, sont constitués de critères prédéfinis optimaux pour le type spécifique de produit cuisiné.

4. Méthode opérationnelle pour l'optimisation de la fonctionnalité de fours électriques selon la revendication 2, **caractérisée en ce que** lesdits paramètres, en fonction desquels la réduction de l'alimentation électrique vers les parties inférieure et supérieure de la chambre de cuisson est interpolée d'une manière équilibrée, sont constitués :
- du paramétrage manuel de la différence de chauffage entre la partie inférieure et la partie supérieure définie par l'opérateur en fonction du cycle de cuisson spécifique ;
- et/ou du paramétrage manuel de la différence de chauffage entre la partie inférieure et la partie supérieure initialement définie par l'opérateur ;
- et/ou de la valeur moyenne des paramétrages manuels de la différence de chauffage entre la partie inférieure et la partie supérieure définie par l'opérateur sur une période de temps ;
- et/ou de la différence de chauffage entre la partie inférieure et la partie supérieure réinitialisée pour le type spécifique de cuisson si une telle fonction est disponible et appliquée ;
- et/ou du paramétrage manuel de la différence de chauffage entre la partie inférieure et la partie supérieure définie par l'opérateur pour le type spécifique de cuisson lorsqu'il peut être prédéfini ;
- et/ou des valeurs moyennes de paramétrage manuel concernant la différence de chauffage entre la partie inférieure et la partie supérieure définie par l'opérateur pour le type spécifique de cuisson lorsqu'il peut être prédéfini ;
- et/ou de l'interpolation des paramètres susmentionnés et/ou de chacun d'entre eux avec l'action ou les actions de correction manuelle effectuée(s) par l'opérateur selon le paramétrage manuel de la différence de chauffage entre la partie inférieure et la partie supérieure définie par l'opérateur selon le cycle de cuisson spécifique ;
- et/ou de l'interpolation des paramètres susmentionnés et/ou chacun d'entre eux avec l'action ou les actions de correction manuelle effectuée(s) par l'opérateur selon les valeurs moyennes des paramétrages manuels de la différence de chauffage entre la partie inférieure et la partie supérieure définie par l'opérateur sur une période de temps.

5. Méthode opérationnelle pour l'optimisation de la fonctionnalité de fours électriques professionnels, en particulier pour des pizzas, selon la revendication 2, **caractérisée en ce qu'**elle peut être mise en œuvre automatiquement via une logique informatisée programmée pour mettre en œuvre les paramètres et corrections survenant dans le temps, les opérations de correction et de programmation étant effectuées manuellement par l'opérateur, et sensiblement toutes les actions de l'opérateur, les traitant et obtenant des valeurs correctives moyennes selon la pondération relative.

6. Méthode opérationnelle pour l'optimisation de la fonctionnalité de fours électriques professionnels, en particulier pour des pizzas, selon l'une quelconque des revendications 2 à 3, **caractérisée en ce que** si la gestion électronique de l'autolimitation, quelle que soit la combinaison interpolation équilibrée relative et mode de réalisation, venait à échouer, un système de sécurité indépendant et autonome constitué d'un dispositif électromécanique interviendrait à l'encontre du risque de dépassement de la puissance maximale, coupant totalement l'alimentation électrique après la détection du pic dépassant la valeur maximale, via une électrovanne ou un fusible, possiblement réinitialisable.

7. Méthode opérationnelle pour l'optimisation de la fonctionnalité de fours électriques professionnels, en particulier pour des pizzas, selon l'une quelconque des revendications 2 à 3, **caractérisée en ce qu'**une logique informatisée programmée pour la mise en œuvre de la méthode prévoit :
- la gestion des quatre sorties, c'est-à-dire des sorties constituées des deux unités indépendantes (P1, P2) des résistances (P) pour le chauffage de la partie inférieure et des sorties constituées des deux unités indépendantes (C1, C2) des résistances (C) pour le chauffage de la partie supérieure de la chambre de cuisson, selon deux paramètres d'entrée constitués du temps d'activation (T1) des deux unités indépendantes (P1, P2) des résistances (P) pour le chauffage de la partie inférieure lors de l'énième intervalle et du temps d'activation (T2) des deux unités indépendantes (C1, C2) des résistances (C) pour le chauffage de la partie supérieure durant l'énième intervalle ;
- la détermination, pour chaque durée prédéfinie de l'énième intervalle, des sorties devant être activées et de la durée d'activation de ces dernières selon le temps (T1) d'activation des sorties (P1, P2) des résistances (P) pour le chauffage de la partie inférieure durant l'énième intervalle et selon le temps (T2) d'activation des sorties (C1, C2) des résistances (C) pour le chauffage de la partie supérieure durant :
- l'énième intervalle ;
- lorsque les conditions sont remplies et selon lesquelles :
- seul un maximum de trois sorties peuvent être simultanément actives en l'absence de combinaison temporelle (T1) pour l'activation des sorties (P1, P2) des résistances (P) pour le chauffage de la partie inférieure durant l'énième intervalle et le temps (T2) pour l'activation des sorties (C1, C2) des résistances (C) pour le chauffage de la partie supérieure durant l'énième intervalle concernant les sorties, parmi l'ensemble des quatre sorties (P1, P2, C1, C2) de cette dernière, qui sont simultanément actives ;
- si possible, la totalité de l'intervalle disponible est utilisé pour activer les sorties selon les entrées définies afin de ne pas actionner une remodulation des entrées temporelles (T1) pour l'activation des sorties (P1, P2) des résistances (P) pour le chauffage de la partie inférieure et du temps (T2) pour l'activation des sorties (C1, C2) des résistances (C) pour le chauffage de la partie supérieure ;
- si l'intervalle échoue à contenir les paramètres saisis constitués des paramètres définis par l'opérateur, la logique informatisée décidera d'une remodulation en l'absence de temps (T1) pour l'activation des sorties (P1, P2) des résistances (P) pour le chauffage de la partie inférieure et du temps (T2) pour l'activation des sorties (C1, C2) des résistances (C) pour le chauffage de la partie supérieure afin de les rendre conformes à la durée de l'intervalle prédéfini.

8. Méthode opérationnelle selon la revendication précédente, **caractérisée en ce que** si le besoin devait survenir d'activer la sortie (P1) sous la zone de la partie inférieure immédiatement orientée vers l'orifice d'accès au four et la sortie (P2) sous la zone de la partie inférieure la plus éloignée par rapport à l'orifice d'accès au four, et la sortie (C1) entrant en contact avec la zone de la partie supérieure immédiatement orientée vers l'orifice d'accès au four et la sortie (C2) entrant en contact avec la zone de la partie supérieure la plus éloignée par rapport à l'orifice d'accès au four à divers moments, l'activation de la sortie (P1) sous la zone de la partie inférieure immédiatement orientée vers l'orifice d'accès au four serait prioritisée par rapport à la sortie (P2) sous la zone de la partie inférieure la plus éloignée par rapport à l'orifice d'accès au four et de la sortie (C1) entrant en contact avec la zone de la partie supérieure immédiatement orientée vers l'orifice d'accès au four par rapport à la sortie (C2) entrant en contact avec la zone de la partie supérieure la plus éloignée par rapport à l'orifice d'accès au four.
